Europäisches Patentamt

European Patent Office

Office européen des brevets

(19)

(11) Publication number: **0 447 931 A2**

# EUROPEAN PATENT APPLICATION

(21) Application number: **91103794.3**

(22) Date of filing: **13.03.91**

(51) Int. Cl.5: **G01N 21/35**

(30) Priority: **20.03.90 IT 1972190**

(43) Date of publication of application:
**25.09.91 Bulletin 91/39**

(84) Designated Contracting States:
**CH DE ES FR GB IT LI NL**

(71) Applicant: **TECSA S.P.A.**
**Via Caravaggi**
**I-24040 Levate (BG)(IT)**

(72) Inventor: **Lancia, Antonio**
**Via Marconi, 69**
**I-24040 Scanzo (BG)(IT)**

(74) Representative: **Dr. Ing. A. Racheli & C.**
**Viale San Michele del Carso, 4**
**I-20144 Milano(IT)**

(54) **Infrared laser fibre optics gas detection device.**

(57) A device able to detect gas in the atmosphere, based on a IAFOS (Infrared Absorption Fibre-Optics Spectrometer) composed of a central unit (1) connected to at least one measuring cell (2) by one or more optical fibres (3); the central unit (1) contains a stabilized laser source (4) operating at wavelengths above 2,9 microns and modulated with a wavelength frequency F ranging from 500 Hz to 200 KHz; the central unit also includes a lock-in amplifier (20) operating at a frequency 2F, receiving as an input the detected return signal from the measuring cell (2); the output signal I2F is then processed in the processing unit (12) in order to detect gas in the atmosphere.

FIG. 1

The present invention relates to a device for measuring quantitatively the presence of some gases or vapours in the atmosphere.

Among the purposes for which the gas and vapour detection in the atmosphere is useful or necessary, there is a special interest in detecting toxic and flammable substances entailing damage to human beings or others.

For example it is necessary to detect the presence of flammable gases in the nearby of liquefied hydrocarbon gases deposits, off-shore oil or gas rigs, gas pipeline pumping stations, chemical plants, oil refineries or processing plants, etc.

In past years several devices have been developed to detect one or more gases through different techniques.

Generally speaking, it is possible to classify gas detectors in different ways, for example according to their measuring principle, nature of the gas to be detected, response rapidity, etc.

For the sake of simplicity, the following structural classification has been adopted:

A) Devices comprising a sensor located in an enclosure isolated from the atmosphere by a septum allowing the penetration of the gas to be detected.

This category includes the most widely used sensors for detecting flammable gases in the industrial sector. Often, these devices are neither sensitive nor rapid enough, they need frequent calibration, they too often trigger false alarms and they tend to lose their sensitivity when natural or artificial agents diminish the permeability of the above mentioned septum.

B) Devices comprising an aspiration and conveying system for atmosphere samples to a suitable analyser.

This devices are equipped with one or more sampling inlets where gas is sucked and conveyed through tubes, filters, valves and other accessories to the analyser device. This can be a spectrophotometer, mass spectrometer, gas chromatographer, etc. This kind of detection system has many drawbacks; the main one consists in that too much time passes between the sample sucking and its subsequent analysis.

C) Spectrometric devices belonging neither to A) nor to B).

This category includes optical systems based on various spectrometric techniques (absorption, RAMAN fluorescence, dispersion, etc.) and working through the radiation analysis (infrared, visible or ultraviolet radiation) coming from the space zone including the atmosphere submitted to gas detection. Some devices emit a suitable radiation (infrared, visible or ultraviolet radiation) directed to said zone.

One of the main advantages of this last category consists in observing the gas without sampling it and then waiting for its diffusion in the inner parts of the system. Moreover, these systems can often monitor large space regions, thus increasing the probability of detecting the gas presence or passage in these areas.

D) Other devices: this category includes those devices excluded from the previoulsy mentioned categories, e.g. Davy lamps and small birds kept in cages.

A number of systems have been developed within the C) category, including the present invention, which will be herein referred to as "Optical Fibres Spectrometers" (OFS). These systems comprise a spectrometric unit connected with one or more measuring devices (herein referred to as "cells") by one or more optical fibres.

OFS detection systems offer many advantages due to the use of optical fibre sensors:

- an often complex single central unit, with high standard performance can be used (Dakin J., "Multiplexed and Distributed optical Fibre Sensor Systems", J. Phys. E. Scientific Instruments 20, pages 954-967, 1987) to measure different space regions through a series of cells;
- the cell can be located where it is usually inconvenient or impossible to place the basic detecting equipment;
- the cell and its connection are usually of the "intrinsic safety" type, since no possibility exists to introduce explosive mixing ignition;
- the cell and its connection to the central unit are highly immune from electromagnetic interferences, even at high intensity.

A number of OFS systems have been so far developed with the purpose of detecting gas (Dakin J., "Review of Fibre Optic Gas Sensor", SPIE Vol. 1011 Optic Sensor III, 1988) by means of different spectrometric techniques (differential absorption, Fourier transform infrared absorption, fluorescence, etc.). Herebelow some examples of publications concerning OFS systems are mentioned.

The French patent No. 84 04271 uses a modulated argon laser connected to a special measuring cell for detecting iodine-129 through fluorescence excitation.

The European patent EP 0 174 722 B1 relates to an OFS system which can also be used for gas detection in the atmosphere measuring the fluorescence with compensation of the luminosity variations of the source.

The International patent WO 87/06011 is based on RAMAN spectrometry using a laser as source and optical fibres to connect the cell to the spectrometer.

Among OFS systems there are several devices, herein referred to as IAFOS (Infrared Absorption Fibre-Optics Spectrometers) based on the selective infrared absorption measurement of chemicals to be detected.

IAFOS systems differ from one another in the following characteristics:

- type of infrared source (hot wires, LED's, laser, etc.);
- measuring technique (differential absorption, FT, etc.);
- method (if applicable) for selecting the infrared wavelength field;
- type of optical fibre;
- type of cell;
- type of detector;
- electronic systems used (lock-in amplifiers, OTDR's, Boxcar Averagers, etc.);
- data acquisition and data processing equipment;
- algorithms and programmes;
- calibration procedures.

In the last few years, laser sources have been preferred also due to their very narrow spectrum band with the advantage of distinguishing the different gas roto-vibrational absorption bands.

An application of laser spectrometry to detect methane in the atmosphere by means of IAFOS system with silica fibres and one GaInAsP laser diode has been recently described (Mohebati A., King T.A., "Differential Absorption Fibre-optic Gas Sensor", SPIE Vol. 1011 Fibre Optic Sensor III, 1988).

Another system (GB-A-2 215 039) has also been described which uses an interferometric "mobile comb filter" with a spacing of the fringes corresponding to that of the roto-vibrational lines of the gas to be detected.

GB-A-2 163 251 describes the use of a spectrum analyser to distinguish the gas absorption from "background absorption".

Most devices reported in patents or publications make use of optical silica fibres (GB-A-2 159 940) offering the advantage of being economical and easily available; moreover they are compatible with many accessories commonly manufactured.

However, silica involves a strong limitation in the range of wavelengths which can be used in the infrared field, namely having a cut-off limit of about 2,7 microns.

With hydrocarbon gases this restriction makes possible the sole observation of absorptions such as "overtone" apborptions which have very low intensity, limiting the sensitivity and rapidity of the measurement.

In such cases, when silica fibres do not allow the use of sufficiently wide wavelengths, some authors suggest the use of hollow fibres containing liquids like CCl₄ (carbon tetrachloride).

Experiments are under way to test optical fibres for medium infrared radiation (Marè G., et al., "Fluoride Glass Fibre-Optic Sensors: Realization and Prospects, in: Optical Fibre Sensors", Proceedings in Physics, Springer Verlag, Berlin, 1989).

Among the various techniques so far proposed, such as those mentioned above a small part can find application in vapour or gas monitoring in the atmosphere when high standard performance is required for:

- sensitivity, accuracy, precision, measurement range, response time, selectivity, reliability, self-diagnostic, insensitivity to any kind of interference (optical, electric, atmospheric disturbances, etc.).

The invention aims at providing a device having a very small false alarms rate and being able to detect the presence of a given gas or vapour in the atmosphere quantitatively.

This aim is achieved by means of a device according to the invention defined in claim 1.

Preferred embodiments of the invention are described in the dependent claims.

The invention will be now described with reference to one of its purely exemplary and therefore not restrictive embodiments, illustrated in the appended drawings, in which:

Figure 1
is a block diagram of the device for gas detection according to the invention;

Figures 2 and 3
schematically show two possible embodiments of a measuring cell.

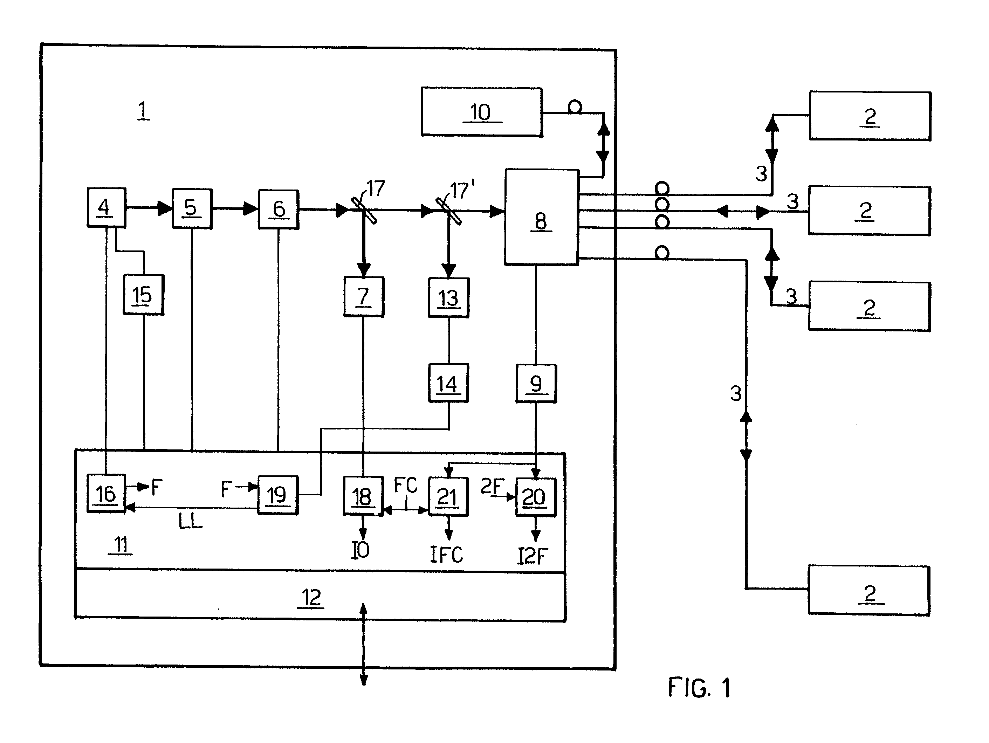

With reference to these figures, and above all to Fig. 1, the gas detection device object of the present invention is composed of a central unit 1 and a series of "measuring cells" 2 connected to the central unit by means of optical fibres 3 possessing sufficient transmittance in the spectral region to be used, which, according to the invention, ranges to wavelengths above 2,8 microns.

Connections 3 are composed of one or two fibres according to the kind of cell and to the central unit optical scheme.

The central unit 1 comprises:

- a laser diode 4 with variable wavelength according to the current supply, including all accessory equipments necessary for its working which are not mentioned in the following points (vacuum pumps, electrovalves, compressors, etc.);
- an optional chopper 5;
- an optional monochromator 6;
- an optional detector 7 for measuring a fraction of the laser infrared radiation intensity;
- a switch or selector 8 for the alternate connection of one of the cells 2 to the central unit 1 optical circuit;
- a detector 9 for measuring the laser infrared beam intensity back from the connected cell 2;

- an optional check and calibration cell 10;
- a control unit 11 for controlling laser 4, laser current modulation, data acquisition, monochromator 6 optional movement, sensing equipment 7, 9, 14, etc. signals amplification;
- a data processing and system control unit 12;
- a reference cell 13 containing the gas to be detected;
- a detector 14 for measuring the laser infrared beam intensity trasmitted through the reference cell 13;
- a laser temperature control system 15.

A series of optical (mirrors, beam-splitters, etc.), mechanical (optical bench, mirror supports, etc.) and electrical (current supply, cables, connectors, etc.) components allow the assembling of the system and the correct functioning of its optical, electrical and fluid-mechanical connections.

Here follows a general description of the device in the measuring operating mode, leaving out start-up, shut-down, calibration and self-diagnosis operations.

The laser is kept at an adequate temperature thanks to suitable equipments and to the temperature control system 15.

The laser current is provided by a special circuit 16 of the control unit 11 and consists in a basic current to which a suitable modulation at a frequency F ranging from 500 Hz to 200 KHz is overlayed. The current value determines the wavelength of laser emission "modes". According to the invention, the wavelength L is modulated at an average value LO with different possible waveforms (sinusoidal, saw tooth, or other).

The LO value is chosen in order to almost coincide with the maximum absorption of a spectral absorption band of the gas/vapour to be detected.

The laser emitted radiation is guided by a suitable mirror system and passes through the chopper 5 and monochromator 6; these are two optional devices and if both are present, they can be positioned in different ways, as shown in Fig. 1; they may, for example, be reversed.

The monochromator 6 may have the function of filtering any undesired laser mode and/or improving diagnosis and extra operations of the measuring system.

A portion of the laser emitted radiation may be, if required, sent to a detector 7 through a beam splitter 17 in order to measure the laser emitted power; if the detector 7 is used and if the chopper 5 is available, the detector 7 signal can be processed by a lock-in amplifier 18 synchronized with the chopper and gives an output signal IO, proportional to the radiation power emitted by the laser.

A portion of the laser radiation is sent, through a second beam splitter 17 to a reference cell 13 and then to the detector 14. The detector signal passes through the lock-in amplifier 19 synchronized at a frequency F, located in the control unit 11. If the average current is changed so that the LO wavelength is shifted around the maximum absorption of the above mentioned absorption spectrum peak, the signal LL emitted by the lock-in 19 connected to the detector 14 shows a minimum value at the maximum of absorption. The signal LL is thus applied to the average laser current control system 16 with the purpose of adding or subtracting an average current value so that the LO wavelength is kept stable when set to the maximum absorption.

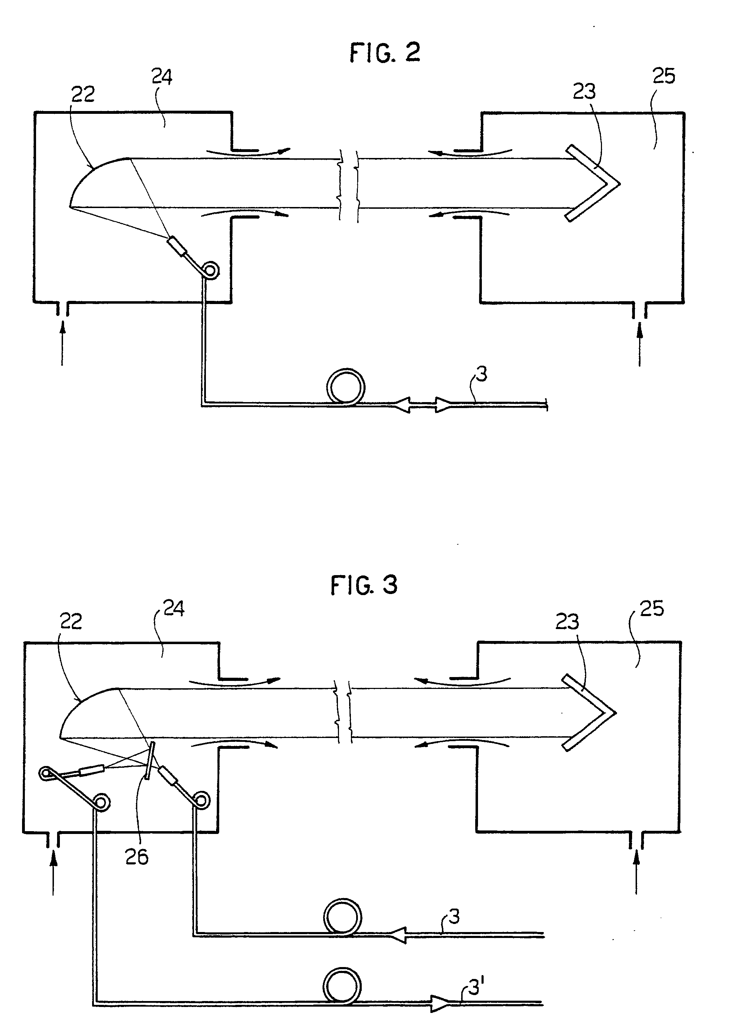

A portion of the laser emitted radiation is injected into the optical fibre 3 selected by the selector 8; after passing through the fibre, the beam is then directed to a cell 2 where it traverses the atmosphere where there is the gas to be detected; it is in turn sent back to the fibre 3 it comes from (see Fig. 2) or to a receiver fibre 3' (see Fig. 3). The beam coming back from the cell 2 to the selector 8 is directed to a detector 9 whose signal is applied to a lock-in 20 at a frequency 2F which gives a signal I2F; the signal can also be applied to a second lock-in 21 synchronized at a chopper 5 frequency which, if present, gives a signal IFC.

The I2F signal is a function of the gas quantity to be analyzed which is present along the optical path and it appears null or insignificant in absence of gas. Any cause determining a variation in the global process of transmittance by introducing a K multiplier factor, independent from the wavelength, modifies the I2F signal proportionally to K.

The IFC signal is proportional to the laser radiation power returning from the optical fibre.

The device is able to determine the presence of gas in the region controlled by the cell 2 through the acquisition of the I2F signal and, if available, IFC and IO signals. IFC can also be obtained directly without a lock-in amplifier; in this case the control unit can be used to perform a suitable processing of this signal vs time.

The amount of gas is calculated by the data processing unit 12.

Once a measuring cycle is completed, the system can repeat it or can select another cell 2 by means of the selector 8 in order to carry out a measuring operation in correspondence of the relative space region.

The central unit 1 may include an optional special measuring cell 10 containing a given amount of gas or vapour to be detected; this cell can be used to check the correct working of the measuring and/or calibration system.

The data processing unit 12 is directly or through the electronic control unit 11 connected to different system components in order to record supplementary data for controlling the correct functioning of the system (tension, pressure, temperature, etc.); this unit can also control, through adequate programs, the carrying out of various operations such as: automatic starting of the device, completing measuring cycles, dialoguing with the operator, measuring system diagnosis, data and alarm release to humans, to signalling systems or to other processing units, etc.. This unit 12 can be implemented within the control unit 11.

Thanks to the use of the I2F signal, false alarms coming from possible transmittance variations in the optical circuit due to various causes (temperature effects, particles, presence of natural or artificial effects in the atmosphere to be analysed, etc.) are eliminated.

Thanks to the combined use of the two signals I2F and IFC (including, if available, the signal IO) it is possible, when calculating the gas amount, to avoid the error due to any transmittance variation in the optical circuit unrelated to the presence of the gas to be detected, allowing also an identification of some possible system malfunctions.

Therefore, the device herein described allows both selective and quantitative gas or vapour detection in the area controlled by the cells 2.

According to the present invention "tunable" laser diodes, i.e. with variable wavelengths operating above 2,9 microns, and non-silica optical fibres, e.g. made of fluoride glass, are used allowing the operation in the infrared region with wavelengths above 2,9 microns.

Referring to Figs. 2 and 3, here follow short descriptions of a measuring cell 2 according to the preferred embodiment, using respectively a single optical fibre 3 or two separate optical fibres 3, 3' for the forward and return radiations.

In Fig. 2 the radiation coming out from the fibre 3 is directed to a parabolic mirror 22 and is then sent through the atmosphere to a cubic retroreflector 23 placed at a variable distance from the mirror 22, ranging for example from 0,5 to 3000 m. The return beam from the retroreflector 23 is then sent back to the central unit 1 through the parabolic mirror 22 and the optical fibre 3.

Both mirror 22 and retroreflector 23 are contained in respective suitable protecting casings 24, 25 where clean gas flux can be provided, especially air, as schematically indicated by arrows, in order to maintain optimum transmittance conditions of the laser radiations.

In Fig. 3 the same reference numerals as in Fig. 2 are used for indicating the same system components. As in this case two optical fibres 3, 3' are provided for the forward and return laser radiations, in the casing 24 a beam-splitter 26 is placed to divert the return beam coming from the retroreflector 23 to the optical fibre 3'.

Among the gases which can be detected with the device according to the invention it is worthwhile mentioning, for example, methane, mercaptans, hydrogen fluoride, fluorocarbon compounds and aldehyde organic compounds.

Of course, the present invention is not limited to the embodiment described above and illustrated in the appended drawings; a number of modifications can be applied to its details, which are within the capabilities of a technician in the art.

## Claims

1. Device for detecting gas in the atmosphere based on a IAFOS (Infrared Absorption Fibre-Optics Spectrometer) composed of a central unit (1) equipped with a stabilized laser source (4), an electronic control unit (11) and a data processing unit (12), the central unit (1) being connected to at least one measuring cell (2) by means of optical fibres (3) for transmitting a laser radiation to said cell and analysing it when returning back, characterized in that said laser operates at a wavelength which is above 2,9 microns and is modulated at a wavelength frequency F, ranging from 500 Hz to 200 KHz, and in that the return signal coming from the cell (2) is applied to a lock-in amplifier (20) synchronized at a frequency 2F, whose output signal I2F is sent to the processing unit (12) for detecting gas presence in the atmosphere.

2. Device according to claim 1, characterized in that said optical fibres (3) are made of fluoride glass or, in any case, of materials able to transmit at wavelengths above 2,9 microns.

3. Device according to claim 1 or 2, characterized in that it provides a chopper (5) placed downstream of the laser (4) and a lock-in amplifier (21) synchronized at chopper frequency receiving as input the return signal from the cell (2) and emitting as output a signal IFC which then passes through the processing unit (12) together with the signal I2F.

4. Device according to claim 3, characterized in that it provides a monochromator (6) downstream of the chopper (5) to filter out any undesired mode of the laser (4).

5. Device according to claim 3 or 4, characterized in that it provides a further lock-in amplifier (18) synchronized at chopper frequency, receiving as input a portion of laser (4) emitted radiation and transmitting an output signal IO which in turn passes through the processing unit (12) together with I2F and IFC signals.

6. Device according to any one of the previous claims, characterized in that the central unit (1) is equipped with a special measuring cell (10) containing a known amount of gas or vapour to be detected which can be used to check the correct working of the measuring and/or calibration system.

7. Device according to any one of the previous claims, characterized in that it provides a reference cell (13) connected to a lock-in amplifier (19) synchronized at a frequency F for the laser (4) stabilization.

8. Device according to any one of the previous claims, characterized in that it provides a number of measuring cells (2) selectively connected to the central unit (1) by a selector (8).

9. Device according to any one of the previous claims, characterized in that each measuring cell (2) is connected to the central unit (1) through a single optical fibre (3) carrying both the laser emitted radiation and the return radiation coming from the cell, or through two optical fibres (3, 3'), respectively for the forward and the return radiations.

10. Device according to any one of the previous claims, characterized in that each measuring cell (2) is provided with a parabolic mirror (22) to divert the laser beam carried by the optical fibre (3) to a retroreflector (23) through the atmosphere and to transmit the return beam from the retroreflector (22) to the central unit (1).

11. Device according to claim 10, wherein the parabolic mirror (22) and the retroreflector (23) are contained in respective suitable casings (24, 25) where gas flux is provided.

12. Device according to claim 10 or 11, wherein said parabolic mirror (22) and retroreflector (23) are placed at a distance ranging from 0,5 to 3000 m.

13. Device according to any one of the previous claims, wherein the detectable gases are in particular: methane, mercaptans, hydrogen fluoride, fluorocarbon compounds and aldehyde organic compounds.

FIG. 1

EP 0 447 931 A2

# FIG. 2

# FIG. 3